# EUROPEAN PATENT APPLICATION

(11) **EP 3 712 641 A1**
(43) Date of publication of application: **23.09.2020**
(21) Application number: 19213480.7
(22) Date of filing: 04.12.2019
(51) Int. Cl.: G01S 7/02, G01S 7/35, G01S 13/38, G01S 13/536

(54) **MICROWAVE DETECTION DEVICE BASED ON DOPPLER EFFECT PRINCIPLE AND ITS ANTI-INTERFERENCE METHOD**

(30) Priority: 22.03.2019 CN 201910221262; 28.04.2019 CN 201910349600; 29.04.2019 CN 201910357495
(71) Applicant: Shenzhen Merrytek Technology Co., Ltd, Shenzhen, Guangdong 518127 (CN)
(72) Inventor: ZOU, Gaodi, Shenzhen, Guangdong 518127 (CN); ZOU, Xin, Shenzhen, Guangdong 518127 (CN); ZOU, Mingzhi, Shenzhen, Guangdong 518127 (CN)
(74) Representative: Casalonga

(57) **Abstract**

A microwave detection device is provided based on Doppler effect principle, wherein by dynamically adjusting a frequency parameter of the microwave detection device, a frequency of an electromagnetic wave emitted by the microwave detection device is maintained dynamically to reduce a chance of one of odd-order harmonic frequencies, even-order harmonic frequencies, and doubling frequencies of the electromagnetic wave matching with the same frequency as the operating frequency of other radio devices, so as to reduce an interference of the microwave detection device with other radio devices. The frequency of the electromagnetic wave received by the microwave detection device is maintained dynamically to reduce a chance of the frequency of the electromagnetic wave matching with the same frequency as the operating frequency of other radio devices, so as to reduce an interference of the microwave detection device with other radio devices.

## Description

### BACKGROUND OF THE PRESENT INVENTION

### FIELD OF INVENTION

The present invention relates to a field of microwave detection, and more particularly to a microwave detection device based on Doppler effect principle and its anti-interference method.

### DESCRIPTION OF RELATED ARTS

With the development and widespread of Internet, such as applications for artificial intelligence and smart home system, microwave detection technology based on Doppler effect principle, especially through the wireless technology, plays a major role for detecting human beings and/or objects. ISM (Industrial Scientific Medical) Band is an unlicensed band provided by the ITU-R (ITU Radio Communication Sector) for use in organizations such as industry, science, and medicine. The frequency bands used for microwave detection opened by ITU-R mainly are 2.4Ghz, 5.8Ghz, 10.525Ghz, 24.125Ghz, etc. When the microwave detector uses these frequency bands, the emitting power of the microwave detector must be regulated (typically less than 1W) for reducing a radio interference with others. Even though different frequency bands are regulated for radio transmission to reduce the mutual interference, the usage of the same bands or neighboring bands for radio transmission will be highly increased. In other words, the mutual interference via the same bands or neighboring bands for radio transmission will be getting worse.

In addition, since the radio technology plays the major role for communication signal transmission, its anti-interference ability is concerned for economic and nation defense security. Therefore, different countries or regions, internationally, set different certified standards for the anti-interference ability for the radio technology, such as RED certification in European Union and FCC certification in United States. In other words, even though there is no authorization requirement for use of microwave detector based on the Doppler effect principle, there are two major problems of seriously increasing the mutual interference and regulating different certified standards internationally or in different countries. Especially for the development of 5G high-speed communication, the coverage of the high-frequency communication network and the usage of corresponding communication devices will increase dramatically, such that the overload of the 5.8Ghz frequency band and its neighboring bands will cause the congestion. Currently, it has a serious electromagnetic radiation interference during the use of microwave detector in 5.8Ghz frequency. At the same time, it is very strict for the use of microwave detector in 5.8Ghz frequency according to the certification standards. According to the IEC (International Electrical Commission) standard, the upper limit of the RS (Radiated Susceptibility) test frequency is increased to 6Ghz correspondingly.

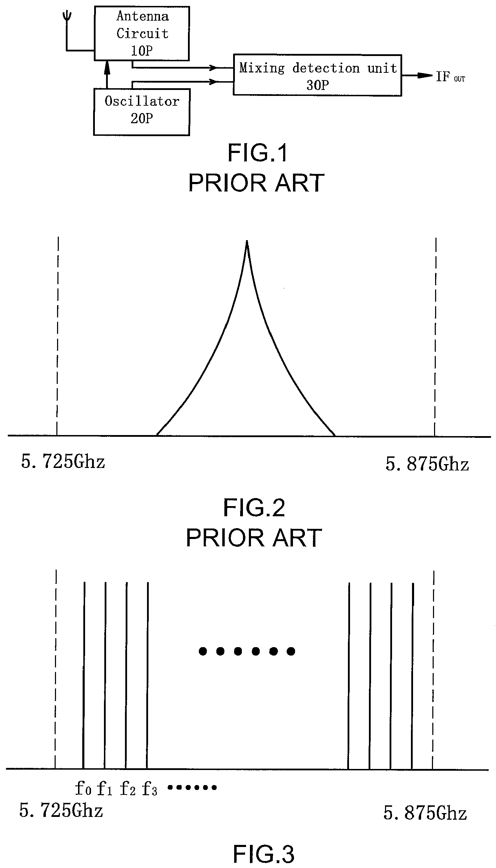

Fig. 1 illustrates a block diagram of a conventional microwave detector using the 5.8Ghz frequency, wherein the microwave detector comprises an antenna circuit 10P, an oscillator 20P, and a mixing detection unit 30P. The oscillator 20P of the microwave detector is operated under a self-oscillation mode, wherein, through the manufacturing process, its oscillation frequency is difficult to be accurately controlled and fixed at a certain frequency point in the 5.8Ghz frequency (5.725-5.875Ghz), and has a certain bandwidth. The antenna circuit 10P is excited by the oscillator 20P to emit an electromagnetic wave signal at one frequency point of the oscillator 20P and to receive a corresponding feedback signal. At the same time, the mixing detection unit 30P is operatively connected to the oscillator 20P and the antenna circuit 10P to detect a frequency difference between the transmitted electromagnetic wave signal and the received feedback signal. Based on the Doppler effect principle, when there is a moving object in the detection area of the microwave detector, the mixing detection unit 30P will detect the frequency difference between the electromagnetic wave signal emitted by the microwave detector and the received feedback signal, such that the mixing detection unit 30P is activated to output a Doppler signal. It could be understood that when there are other electromagnetic wave signals at a frequency corresponding to the frequency point of the microwave detector within the certain bandwidth, the antenna circuit 10P will also receive other electromagnetic wave signals so as to interfere with the target electromagnetic wave signal. In other words, when the electromagnetic wave coverage of the 5.8Ghz frequency and the neighboring frequencies is increased, the probability of the microwave detector being interfered with will also be increased. Through the RS test, the anti-interference test for the microwave detector is performed by gradually increasing the frequency of the test signal via a signal amplitude modulation. When using any microwave detector in the 5.8Ghz frequency, the frequency of the oscillator 20P is fixed at a certain frequency within the 5.8Ghz range. Therefore, the tested signal from the microwave detector will be interfered via the intrusion of odd-harmonic, even-harmonic or frequency multiplication generated by the test signal frequency during the RS test.

Therefore, there is a serious mutual interference problem of the microwave detector based on the Doppler effect principle, especially the microwave detector using the 5.8Ghz frequency range, and it cannot pass the RS test before releasing in the market.

### SUMMARY OF THE PRESENT INVENTION

The invention is advantageous in that it provides a microwave detection device based on Doppler effect principle and its anti-interference method, wherein the frequency parameter of the microwave detection device is dynamically adjusted to allow the frequency of the electromagnetic waves emitted by the microwave detection device to be maintained dynamically. Then, the frequency of the electromagnetic wave emitted by the microwave detection device to reduce the change of any one of the odd-order harmonic frequencies, even-order harmonic frequencies, and doubling frequencies of the electromagnetic wave matching with the same frequency as the operating frequency of other radio devices. As a result, the interference of the microwave detection device with other radio devices will be substantially reduced.

Another advantage of the invention is to provide a microwave detection device based on Doppler effect principle and its anti-interference method, wherein the frequency parameter of the microwave detection device is dynamically adjusted to allow the frequency of the electromagnetic waves received and maintained dynamically. Then, the chance of the frequency of the electromagnetic wave received by the microwave detection device matching with the same frequency of the electromagnetic radiation will be substantially reduced. In other words, the interference of the microwave detection device with other radio devices will be substantially reduced to improve the stability of the microwave detection device.

Another advantage of the invention is to provide a microwave detection device based on Doppler effect principle and its anti-interference method, wherein the frequency parameter of the microwave detection device is dynamically adjusted not only to reduce the chance of the microwave detection device being interfered with other radio devices but also to reduce the chance of the microwave detection device being interfered with the same frequency of the electromagnetic radiation, so as to enhance the anti-interference ability of the microwave detection device.

Another advantage of the invention is to provide a microwave detection device based on Doppler effect principle and its anti-interference method, wherein, based on Doppler effect principle, the microwave detection device is configured to emit the electromagnetic waves and to receive corresponding feedback signal in a detection area, and to generate a differential signal when there are characteristic parameters between the emitted electromagnetic wave and the corresponding feedback signal. Accordingly, the differential signal is configured in response to the motion of the object of the detection area.

Another advantage of the invention is to provide a microwave detection device based on Doppler effect principle and its anti-interference method, wherein the differential signal is a frequency differential signal generated according to a frequency difference between the emitted electromagnetic wave and the received feedback signal, to determine a motion state of an object in the detection area according to a characteristic parameter of the frequency differential signal, such as movement or fine motion of the object in the detection area.

Another advantage of the invention is to provide a microwave detection device based on Doppler effect principle and its anti-interference method, wherein the differential signal is a phase differential signal generated according to a phase difference between the emitted electromagnetic wave and the received feedback signal, to determine a motion state of an object in the detection area according to a characteristic parameter of the phase differential signal, such as movement or fine motion of the object in the detection area.

Another advantage of the invention is to provide a microwave detection device based on Doppler effect principle and its anti-interference method, wherein, based on Doppler effect principle, the microwave detection device is configured to generate the frequency differential signal or the phase differential signal. Since the moving speed of the object in the detection area is much smaller than the electromagnetic wave transmission rate based on the speed of light, the time interval between the electromagnetic wave emitted by the microwave detection device and the feedback signal being reflected and received is relatively small. The frequency parameter of the microwave detection device is considered to have no change. Then, the dynamic adjustment of the frequency parameter of the microwave detection device is difficult to cause any interference to the frequency differential signal or the phase differential signal, such that the accuracy of the feedback of the differential signal to the motion of the object in the detection area can be maintained.

Another advantage of the invention is to provide a microwave detection device based on Doppler effect principle and its anti-interference method, wherein the frequency parameter of the microwave detector is maintained dynamically while the microwave detection device can be prevented from being interfered with a certain frequency or by odd-order harmonic frequencies, even-order harmonic frequencies, and doubling frequencies of the tested signal in the RS test so as to cause the ineffectiveness of the microwave detection device.

Another advantage of the invention is to provide a microwave detection device based on Doppler effect principle and its anti-interference method, wherein, based on Doppler effect principle, the microwave detection device is configured to generate the differential signal. Through the further processing the differential signal, such as limiting and filtering the amplitude and/or frequency of the differential signal, the frequency parameter of the microwave detection device can be adjusted dynamically and the differential signal will not be interfered with other electromagnetic radiation having the same frequency in the detection area, so as to enhance the accuracy of the feedback of the differential signal to the motion of the object in the detection area.

Another advantage of the invention is to provide a microwave detection device based on Doppler effect principle and its anti-interference method, wherein the dynamic adjustment of the frequency parameter of the microwave detection device will not affect the differential signal, such as by performing a step-less adjustment of the frequency parameter of the microwave detection device in a specific frequency range or systemically adjusting the frequency parameter of the microwave detection device by using a frequency hopping technique. Therefore, the dynamic adjustment of the frequency parameter of the microwave detection device can avoid the use of the decoder and the related decoding algorithm different from the frequency dynamic adjustment technology in the communication field. The anti-interference method of the microwave detection device is simple to use, and the corresponding microwave detection device has simple structure and has low manufacturing cost.

Another advantage of the invention is to provide a microwave detection device based on Doppler effect principle and its anti-interference method, wherein since there is no need for the decoder and its decoding algorithms, the dynamic adjustment of the frequency parameter of the microwave detection device is more flexible and simple. Base on the frequency hopping technology in the communication field, the frequency adjustment of the frequency parameter of the microwave detection can be operated without any limiting the frequency hopping mode and avoiding the use of the decoder and its related decoding algorithm, which is convenient to implement and low in cost.

Another advantage of the invention is to provide a microwave detection device based on Doppler effect principle and its anti-interference method, wherein the frequency parameter adjustment of the microwave detection device is achieved by frequency hopping in an order manner, frequency hopping at a certain setting, or frequency hopping in a random manner without the use of the decoder and its decoding algorithms, so as to simplify the operation while being cost effective.

Another advantage of the invention is to provide a microwave detection device based on Doppler effect principle and its anti-interference method, wherein through detecting the frequency points of the electromagnetic radiation having the same frequency in the detection area, the frequency parameter adjustment of the microwave detection device can use a dynamic adjustment mode of active avoidance to further improve the anti-interference ability of the microwave detection device.

Another advantage of the invention is to provide a microwave detection device based on Doppler effect principle and its anti-interference method, wherein when the object in the detection area is maintained stationary, the microwave detection device is configured to emit the electromagnetic waves with at least two different frequencies at a dynamic frequency and to determine whether there is a microwave interference source in the detection signal in response to the differential signal. The microwave detection device is configured to identify the frequency of the microwave interference source in the detection area based on the electromagnetic wave frequency emitted by the microwave detection device, and to dynamically adjust the frequency parameter of the microwave detection device to emit the electromagnetic wave frequency different from the frequency of the microwave interference source in the detection area via an actively avoidance. Therefore, the interference of the microwave detection device from the microwave interference source will be eliminated and the stability of the microwave detection device will be improved.

Another advantage of the invention is to provide a microwave detection device based on Doppler effect principle and its anti-interference method, wherein the microwave detection device is configured to emit the electromagnetic waves with at least two different frequencies at a dynamic frequency and to identify the frequency of the microwave interference source in the detection area based on the electromagnetic wave frequency emitted by the microwave detection device. Then, the microwave detection device is configured to emit the electromagnetic waves having the frequency different from the frequency of the microwave interference source in the detection area, so as to avoid the frequency of the electromagnetic wave emitted by the microwave detection device being the same as the operating frequency of other radio devices. In other words, the electromagnetic waves emitted by the microwave detection will not affect the normal operation of other radio devices.

Another advantage of the invention is to provide a microwave detection device based on Doppler effect principle and its anti-interference method, wherein the frequency of the electromagnetic wave emitted by the microwave detection device is adjusted based on the feedback of the differential signal to determine whether there is a microwave interference source in the detection area when the electromagnetic wave of at least one frequency continuously emitted by the microwave detection device does not have a corresponding differential signal, so as to improve the accuracy of the feedback of the differential signal in response to the motion of the object in the detection area.

Another advantage of the invention is to provide a microwave detection device based on Doppler effect principle and its anti-interference method, wherein by inputting a frequency-variable control voltage/current to an oscillator of the microwave detection device via a feedback adjustment method, the frequency parameter of the microwave detection is dynamically adjusted to enable the microwave detection device to emit electromagnetic waves at a dynamic frequency and to allow the frequency of the electromagnetic waves received by the microwave detection device to be maintained dynamically.

Another advantage of the invention is to provide a microwave detection device based on Doppler effect principle and its anti-interference method, wherein by outputting the step voltage to adjust the feedback operating voltage/current to the oscillator, the frequency parameter of the microwave detection device is dynamically adjusted by means of frequency hopping.

Another advantage of the invention is to provide a microwave detection device based on Doppler effect principle and its anti-interference method, wherein by outputting a linear analog voltage to adjust the feedback operating voltage/current to the oscillator, the frequency parameter of the microwave detection device is adjusted by means of step-less frequency change.

Another advantage of the invention is to provide a microwave detection device based on Doppler effect principle and its anti-interference method, wherein by outputting a pulse integrated voltage to adjust the feedback operating voltage/current to the oscillator, the frequency parameter of the microwave detection device is adjusted by means of step-less frequency change.

Another advantage of the invention is to provide a microwave detection device based on Doppler effect principle and its anti-interference method, which does not require altering the original structural configuration of the conventional microwave detector, and does not require any expensive and complicated structure. Therefore, the present invention provides an economical and effective solution for the anti-interference of the microwave detection device.

Another advantage of the invention is to provide a microwave detection device based on Doppler effect principle and its anti-interference method, wherein the antenna circuit of the microwave detection is a low impedance antenna. The bandwidth of the microwave detection device is narrowed by lowering the impedance to prevent the microwave signal received or generated by the microwave detection device from being interfered by electromagnetic radiation of an adjacent frequency range.

Another advantage of the invention is to provide a microwave detection device based on Doppler effect principle and its anti-interference method, wherein a basic narrowband oscillation frequency of the microwave detection is provided by a crystal oscillator or a standard frequency source, to narrow the bandwidth of the microwave detection device so as to enhance the anti-interference ability of the microwave detection device.

Another advantage of the invention is to provide a microwave detection device based on Doppler effect principle and its anti-interference method, which is based on a circuit module of any one or more of Automatic Frequency Control (AFC), Phase Locked Loops (PLL), and Direct Digital Synthesizer (DDS), voltage controlled oscillator (VCO), frequency divider, frequency multiplier. The frequency of the microwave detection device is controllable to achieve frequency hopping adjustment of the frequency parameter of the microwave detection device, which is simple and easy.

Another advantage of the invention is to provide a microwave detection device based on Doppler effect principle and its anti-interference method, wherein the bandwidth of the microwave detection device is narrowed in a fixed frequency range, such as in the 5.8 GHz. The frequency hopping points of the microwave detection device will be increased to reduce the chance of the frequency hopping adjustment of the microwave detection being interfered by the electromagnetic radiation having the same frequency. In other words, the is advantageous to improve the anti-interference ability of the microwave detection device by adjusting the frequency parameter of the microwave detection device via the frequency hopping.

Another advantage of the invention is to provide a microwave detection device based on Doppler effect principle and its anti-interference method, wherein the microwave detection device is configured to continuously emit the electromagnetic waves at different frequency points at a dynamic frequency, such that the harmonics (second harmonic, third harmonic, etc.) of electromagnetic waves at different frequency points tend to be flat, which is beneficial to reduce harmonic interference of the microwave detection device.

According to the present invention, the foregoing and other objects and advantages are attained by an anti-interference method of a microwave detection device based on Doppler effect principle, wherein the method comprises the steps of:
(a) emitting at least a detection signal at a dynamic frequency in a frequency range to form at least one detection area;
(b) receiving a feedback signal formed by the detection signal reflected by at least an object within the detection area; and
(c) outputting a differential signal in response to a difference in characteristic parameters between the detection signal and the feedback signal, wherein the differential signal is configured in response to a motion of the object in the detection area.

Accordingly, the step (b) and the step (c) are performed during performing the step (a).

In one embodiment, the frequency is set at a 5.8 GHz frequency range having a frequency range of 5.725-5.875 GHz in the step (a).

In one embodiment, in the step (c), the differential signal is a frequency differential signal generated in response to a frequency difference between the detection signal and the feedback signal.

In one embodiment, in the step (c), the differential signal is a phase differential signal generated in response to a phase difference between the detection signal and the feedback signal.

In one embodiment, the step (a) further comprises the steps of detecting the differential signal, and hopping and emitting the detection signal when the differential signal is fluctuating.

In one embodiment, the step (a) further comprises the steps of detecting the differential signal, hopping the frequency of the detection signal at least one time to output the detection signal when the differential signal is fluctuating, and subsequently maintaining the frequency of the detection signal after the frequency of the detection signal is hopped.

In one embodiment, the step (a) further comprises the steps of detecting electromagnetic radiation frequency points at the same frequency range in the detection area, and when the electromagnetic radiation frequency point at the same frequency range exists in the detection area, hopping and emitting the detection signal at an undetected frequency point.

In one embodiment, the step (a) further comprises the steps of providing a basic narrowband oscillation frequency by one of a crystal oscillator and a standard frequency source, and within the frequency range, emitting the detection signal by hopping the detection signal at different frequency doubling stages of the narrow frequency oscillation frequency, so as to hop and emit the detection signal at the dynamic frequency.

In one embodiment, in the step (a), the narrow frequency oscillation frequency at different frequency doubling stages is generated by a circuit module of any one or more of Automatic Frequency Control (AFC), Phase Locked Loops (PLL), Direct Digital Synthesizer (DDS), voltage controlled oscillator (VCO), frequency divider and frequency multiplier, in order to hop and emit the detection signal.

In one embodiment, after the step (c), the method further comprises a step of:
(d) filtering the differential signal by limiting an amplitude of the fluctuation of the differential signal, to prevent an interference of the differential signal from an emission frequency change of the detection signal so as to ensure an accuracy of the feedback of the differential signal in response to the motion of the object within the detection area.

In one embodiment, in the step (a), through providing an oscillation frequency by an oscillator, and in the frequency range, the detection signal is emitted at the dynamic frequency by controlling an antenna circuit to transmit a frequency adjustment control signal to the oscillator.

In one embodiment, in the step (a), the frequency adjustment control signal is a step voltage that the detection signal is emitted by frequency hopping in the frequency range.

In one embodiment, in the step (a), the step voltage is formed based on switching among a high voltage level, a low voltage level, and a high resistance state.

In one embodiment, in the step (a), the step voltage is based on a segment voltage change between a high voltage level and a low voltage level.

In one embodiment, in the step (a), the frequency adjustment control signal is a linear analog voltage, wherein the detection signal is emitted at a dynamic frequency in a linearly varying manner within the frequency range.

In one embodiment, in the step (a), the frequency adjustment control signal is a pulse integrated voltage, wherein the pulse integrated voltage is an adjustment of a pulse width and an integration of a DC voltage after processing.

In one embodiment, the step (a) further comprises the steps of detecting the differential signal, and transmitting the frequency change control signal to the oscillator when the differential signal is fluctuating.

In accordance with another aspect of the invention, the present invention comprises a microwave detection device based on Doppler effect principle, comprising:
a frequency hopping oscillating unit configured for hopping and outputting an excitation signal in a frequency range;
an antenna circuit, wherein the antenna circuit is electrically connected to the frequency hopping oscillating unit and configured for being excited by the excitation signal to emit at least one detection signal having the same frequency of the excitation signal to form at least one detection area, wherein the antenna circuit is configured to receive a feedback signal formed by the detection signal reflected by at least an object within the detection area; and
a mixing detection unit, wherein the mixing detection unit is electrically connected to the frequency hopping oscillating unit and the antenna circuit, wherein when the feedback signal is received by the antenna circuit, the antenna circuit is configured to transmit the feedback signal to the mixing detection unit, wherein the mixing detection unit is configured to receive the excitation signal and the feedback signal and to output a differential signal in response to a difference in characteristic parameters between the excitation signal and the feedback signal, wherein the differential signal is configured in response to a motion of the object in the detection area.

In one embodiment, the mixing detection unit is configured to output the differential signal in response to a frequency parameter difference between the excitation signal and the feedback signal.

In one embodiment, the mixing detection unit is configured to output the differential signal in response to a phase parameter difference between the excitation signal and the feedback signal.

In one embodiment, the frequency hopping oscillating unit is further configured to detect the differential signal by electrically connecting with the mixing detection unit, and to hop and emit the excitation signal when the differential signal is fluctuating, so as to enable the antenna circuit to hop and emit the detection signal when the differential signal is fluctuating.

In one embodiment, when the differential signal is fluctuating, the frequency hopping oscillating unit is configured to hop the frequency of the excitation signal at least one time to output the excitation signal, and to subsequently maintain the frequency of the excitation signal after the frequency of the detection signal is hopped, so as to enable the antenna circuit to emit the detection signal when the differential signal is fluctuating at least one time, such that the frequency of the detection signal is fixed and maintained subsequently.

In one embodiment, the frequency hopping oscillating unit is configured to provide a basic narrow frequency oscillating frequency by one of a crystal oscillator and a standard frequency source to allow the frequency hopping oscillating unit to hop and emit the excitation signal at different frequency doubling stages of the narrow frequency oscillation frequency.

In one embodiment, the frequency hopping oscillating unit further comprises a circuit module of any one or more of Automatic Frequency Control (AFC), Phase Locked Loops (PLL), Direct Digital Synthesizer (DDS), voltage controlled oscillator (VCO), frequency divider and frequency multiplier, in order to hop and emit the detection signal. The excitation signal is hopped and emitted at different frequency doubling stages of the basic narrow frequency oscillating frequency provided by the crystal oscillator or the standard frequency source.

In one embodiment, the frequency hopping oscillating unit is configured as the phase locked loop and is configured to provide the basic narrowband oscillating frequency by the crystal oscillator, such that the frequency hopping oscillating unit is adapted to be controlled by the frequency hopping control signal to hop and emit the excitation signal at different frequency doubling stages of the basic narrow frequency oscillating frequency.

In one embodiment, the frequency hopping oscillating unit, which is configured as the phase locked loop, comprises the crystal oscillator, a phase detector, a low pass filter, and the voltage controlled oscillator. The crystal oscillator, the phase detector, the low pass filter and the voltage controlled oscillator are sequentially connected in order, wherein the phase detector is connected to the voltage controlled oscillator. The voltage controlled oscillator is electrically connected to the antenna circuit and the mixing detection unit at the same time, such that the voltage controlled oscillator is controlled by the frequency hopping control signal to hop and emit the excitation signal at different frequency doubling stages of the basic narrow frequency oscillating frequency.

In one embodiment, the frequency hopping oscillating unit is configured as the automatic frequency control circuit and is configured to provide the basic narrowband oscillating frequency by the standard frequency source, such that the frequency hopping oscillating unit is adapted to be controlled to hop and emit the excitation signal at different frequency doubling stages of the basic narrow frequency oscillating frequency.

In one embodiment, the frequency hopping oscillating unit, which is configured as the automatic frequency control circuit, comprises the standard frequency source, a frequency discriminator, a control unit, and the voltage controlled oscillator. The frequency discriminator is electrically connected to the standard frequency source, the control unit, and the voltage controlled oscillator respectively. The control unit is further electrically connected to the voltage controlled oscillator, wherein the voltage controlled oscillator is electrically connected to the antenna circuit and the mixing detection unit at the same time, such that the voltage controlled oscillator is controlled by the control unit to hop and emit the excitation signal at different frequency doubling stages of the basic narrow frequency oscillating frequency.

In one embodiment, the frequency hopping oscillating unit is configured to provide the narrowband oscillation by the crystal oscillator, and to set the frequency hopping control signal to a direct digital frequency synthesizer, so as to hop and emit the excitation signal at different frequency doubling stages of the basic narrow frequency oscillating frequency.

In one embodiment, the frequency hopping oscillating element unit comprises the crystal oscillator and the direct digital frequency synthesizer electrically connected to the crystal oscillator, wherein the direct digital frequency synthesizer is electrically connected to the antenna circuit and the mixing detection unit at the same time, such that the excitation signal is hopped and output by setting the frequency hopping control signal to the direct digital frequency synthesizer.

In one embodiment, the frequency hopping oscillating unit is configured as the phase locked loop and is configured to provide the basic narrowband oscillating frequency by the crystal oscillator, such that the excitation signal is hopped and output by setting the frequency hopping control signal to the direct digital frequency synthesizer.

In one embodiment, the frequency hopping oscillating unit comprises the crystal oscillator, the frequency multiplier, the direct digital frequency synthesizer, a low pass filter, a phase detector, and another low pass filter and the voltage controlled oscillator being electrically connected sequentially, wherein the voltage controlled oscillator is electrically connected to the phase detector, the antenna circuit and the mixing detection unit for hopping and outputting the excitation signal by setting a frequency hopping control signal to the direct digital frequency synthesizer.

In one embodiment, the frequency hopping oscillating unit is configured at a self-excited oscillation mode to output an oscillation frequency by the oscillator, and is configured to electrically connect a frequency adjustment setting module to the oscillator, wherein the frequency adjustment setting module is configured to output the frequency adjustment control signal to the oscillator in order to control the oscillator to output the excitation signal at a dynamic frequency.

In one embodiment, the frequency adjustment setting module is configured to output the frequency adjustment control signal to the oscillator when the differential signal is fluctuating.

In one embodiment, the frequency adjustment control signal output by the frequency adjustment setting module is a step voltage.

In one embodiment, the step voltage is formed based on switching among a high voltage level, a low voltage level, and a high resistance state.

In one embodiment, the step voltage is based on a segment voltage change between a high voltage level and a low voltage level.

In one embodiment, the frequency adjustment control signal output by the frequency adjustment setting module is a linear analog voltage.

In one embodiment, the frequency adjustment control signal output by the frequency adjustment setting module is a pulse integrated voltage, wherein the pulse integrated voltage is an adjustment of a pulse width and an integration of a DC voltage after processing.

In one embodiment, the microwave detection device further comprises an amplifying unit, wherein the amplifying unit is electrically connected to the mixing detecting unit for amplifying the differential signal.

Still further objects and advantages will become apparent from a consideration of the ensuing description and drawings.

These and other objectives, features, and advantages of the present invention will become apparent from the following detailed description, the accompanying drawings, and the appended claims.

### BRIEF DESCRIPTION OF THE DRAWINGS

Fig. 1 illustrates a block diagram of a conventional microwave detector using the 5.8Ghz frequency.
Fig. 2 is a diagram illustrating a frequency distribution of the conventional microwave detector using the 5.8Ghz frequency.
Fig. 3 is a diagram illustrating frequency distribution of a microwave detection device using the 5.8Ghz frequency according to a preferred embodiment of the present invention.
Fig. 4 is a block diagram illustrating the frequency hopping of the microwave detection device based on Phase Locked Loops PLL according to the preferred embodiment of the present invention.
Fig. 5 is a block diagram illustrating the frequency hopping of the microwave detection device based on Automatic Frequency Control AFC according to the preferred embodiment of the present invention.
Fig. 6 is a block diagram illustrating the frequency hopping of the microwave detection device based on Direct Digital Synthesizer DDS according to the preferred embodiment of the present invention.
Fig. 7 is a block diagram illustrating the frequency hopping of the microwave detection device based on Phase Locked Loops PLL and Direct Digital Synthesizer DDS according to the preferred embodiment of the present invention.
Fig. 8 is a diagram illustrating the structural configuration of the microwave detection device for dynamic adjustment of frequency parameters according to the preferred embodiment of the present invention.
Fig. 9 is a diagram illustrating a system of the microwave detection device according to the preferred embodiment of the present invention.
Fig. 10 is a diagram illustrating an alternative mode of the system of the microwave detection device according to the preferred embodiment of the present invention.
Fig. 11 is a diagram illustrating another alternative mode of the system of the microwave detection device according to the preferred embodiment of the present invention.
Fig. 12A is a circuit diagram of the microwave detection device according to the preferred embodiment of the present invention.
Fig. 12B is a circuit diagram illustrating a modification of the microwave detection device according to the preferred embodiment of the present invention.
Fig. 12C is a circuit diagram illustrating another modification of the microwave detection device according to the preferred embodiment of the present invention.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention. It is appreciated that the terms "longitudinal", "transverse", "upper", "lower", "front", "rear", "left", "right", vertical", "horizontal", "top", "bottom", "exterior", and "interior" in the following description refer to the orientation or positioning relationship in the accompanying drawings for easy understanding of the present invention without limiting the actual location or orientation of the present invention. Therefore, the above terms should not be an actual location limitation of the elements of the present invention.

It is appreciated that the terms "one", "a", and "an" in the following description refer to "at least one" or "one or more" in the embodiment. In particular, the term "a" in one embodiment may refer to "one" while in another embodiment may refer to "more than one". Therefore, the above terms should not be an actual numerical limitation of the elements of the present invention.

The present invention provides an anti-interference method based on Doppler effect principle for an electromagnetic radiation, wherein through the dynamically adjusting the frequency parameters of the microwave detection device, the frequency of the electromagnetic wave emitted by the microwave detection device is maintained in a dynamic state, so as to reduce the probability of the electromagnetic wave frequency emitted by the microwave detection device, and its odd-harmonic and even-harmonic frequency, and frequency multiplication matching with the operating frequency of other radio devices. In other words, the chance of the interference of the microwave detection device to other radio devices will be substantially reduced. At the same time, the microwave detection is able to receive the electromagnetic wave in order to maintain in the dynamic state, so as to reduce the probability of the microwave detection device receiving different frequencies of the other devices with the same frequency of the electromagnetic wave. In other words, it will reduce the probability of the microwave detection device being interfered by other electromagnetic waves.

Accordingly, the present invention provides an anti-interference method of a microwave detection device based on Doppler effect principle, wherein the method comprises the following steps.
(a) Transmit a detection signal at a dynamic frequency within a frequency range to define a detection area.
(b) Receive a feedback signal, as a reflected signal, which is formed by reflecting the detection signal from an object within the detection area.
(c) Output a differential signal in response to differential characteristic parameters between the detection signal and the feedback signal, wherein the differential signal corresponds to a motion of the object in the detection area.

It is worth mentioning that the transmission speed of the detection signal is based on the speed of light. Accordingly, the emission of the detection signal in the step (a), the reception of the feedback signal in the step (b), and the output of the differential signal in the step (c) are performed simultaneously within a certain time period. In one embodiment, the step (b) and the step (c) can be not executed during the step (a) of detecting the frequency change of the detection signal. It should be understood that the step (a), the step (b) and the step (c) in the anti-interference method based on Doppler effect principle are the basic steps and should not be limited.

Particularly, in the step (c), the differential signal is a frequency differential signal generated according to a frequency difference between the detection signal and the corresponding feedback signal. Alternatively, the differential signal is formed by a phase difference between the detection signal and the corresponding feedback signal, wherein the motion state of the object within the detection area is detected and determined by the frequency differential signal or the characteristic parameter of the phase differential signal.

It should be understood that the moving speed of the object within the detecting area is much smaller than the electromagnetic wave transmission rate based on the speed of light. According to the anti-interference method based on Doppler effect principle, the consuming time of emitting the detection signal in the step (a) to be reflected by the object for forming the feedback signal is much less than the consuming time of changing the transmission frequency of the detection signal in the step (a). At the time when the detection signal is emitted in the step (a) to the object and is reflected thereby to form the corresponding feedback signal, the frequency of the detection signal emitted in the step (a) is considered unchanged. In other words, the detection signal at a dynamic frequency in the step (a) is difficult to cause interference for the differential signal outputted in the step (c), so as to enhance an accuracy of the differential signal to the motion of the object in the detection area in response to the feedback signal.

In the step (a) of the anti-interference method based on Doppler effect principle, since the frequency change of the detection signal emitted in the step (a) is difficult to interfere with the differential signal in the step (c), the dynamic adjustment of the transmission frequency of the detection signal is suitable for using frequency hopping technology to avoid the use of the decoder and the related decoding algorithm, and is different from the frequency hopping processing technology in the conventional communication field. Therefore, the anti-interference method based on Doppler effect principle of the present invention is simplified.

According to the preferred embodiment, in the step (a), a narrowband oscillation frequency is provided by means of a crystal oscillator or a standard frequency source and is within the frequency range, such as the 5.8Ghz band with a frequency range of 5.725-5.875Ghz. The detection signal is emitted by frequency hopping at different frequency doubling levels of the narrow frequency oscillation frequency, so as to form the dynamic adjustment of the emission frequency of the detection signal.

It is worth mentioning that the anti-interference method based on Doppler effect principle of the present invention incorporates with the crystal oscillator or the standard frequency source to provide the narrow-frequency oscillation frequency, wherein, in the step (a), the detection signal is emitted by frequency hopping of the narrow frequency oscillation frequency. Accordingly, the bandwidth of the crystal oscillator or the standard frequency source is narrowed and is set in a fixed frequency range, such as a frequency range of 5.8Ghz. In the step (a), by increasing the frequency hopping point of the frequency hopping transmitting the detection signal, it is beneficial for reducing the probability of the same frequency between the detection signal and the electromagnetic radiation.

Furthermore, in the step (a), a circuit module of any one or more of Automatic Frequency Control AFC, Phase Locked Loops PLL, and Direct Digital Synthesizer DDS is used to generate the detection signal by frequency hopping with a frequency of different frequency doubling stages of the narrow frequency oscillation frequency. Therefore, the anti-interference method based on Doppler effect principle of the present invention is simplified.

According to one embodiment as an example, in the step (a), the narrowband oscillation frequency is provided by the crystal oscillator, wherein the narrowband frequency is generated by controlling the Phase Locked Loops via a frequency hopping control signal, so as to generate different operating frequency points by frequency of different frequency doubling levels of the oscillating frequency. As a result, the detection signal is emitted via the hopping emission.

According to the another embodiment as another example, in the step (a), the narrowband oscillation frequency is provided by the standard frequency source, wherein the narrowband frequency is generated by controlling the Automatic Frequency Control, so as to generate different operating frequency points by frequency of different frequency doubling levels of the oscillating frequency. As a result, the detection signal is emitted via the hopping emission.

According to the another embodiment as another example, in the step (a), the narrowband oscillation frequency is provided by the crystal oscillator, wherein the narrowband frequency is generated by controlling the Direct Digital Synthesizer via a frequency hopping control signal, so as to generate different operating frequency points by frequency of different frequency doubling levels of the oscillating frequency. As a result, the detection signal is emitted via the hopping emission.

According to the another embodiment as another example, in the step (a), the narrowband oscillation frequency is provided by the crystal oscillator, wherein the narrowband frequency is generated by controlling the Phase Locked Loops and the Automatic Frequency Control via a frequency hopping control signal, so as to generate different operating frequency points by frequency of different frequency doubling levels of the oscillating frequency. As a result, the detection signal is emitted via the hopping emission.

According to the preferred embodiment, wherein the step (a) further comprises the steps of outputting an oscillating frequency by an oscillator, and changing the output oscillating frequency by inputting a frequency-variable control voltage/current to the oscillator via a feedback adjustment method, so as to emit the detection signal at the dynamic frequency.

According to the anti-interference method based on Doppler effect principle of the present invention, in the step (a), the anti-interference method should not be limited by the implementation of the frequency hopping emission of the detection signal. For example, it should not be limited to incorporate with one or more circuit modules of the Automatic Frequency Control AFC, the Phase Locked Loops PLL, and the Direct Digital Synthesizer DDS to generate different working frequency points and emit the detection signal via the frequency hopping. Alternatively, the detection signal is emitted at the dynamic frequency by changing the output oscillating frequency of the oscillator by inputting a frequency-variable control voltage/current to the oscillator via a feedback adjustment method.

Particularly, the anti-interference method based on Doppler effect principle is suitable for using frequency hopping technology to avoid the use of the decoder and the related decoding algorithm via the dynamic adjustment of the transmission frequency of the detection signal. In the step (a), the rule of the dynamic adjustment of the transmission frequency of the detection signal should not be limited. For example, it should not be limited for the emission of the detection signal by frequency hopping in a frequency order. Alternatively, the rule of the emission of the detection signal is preset or by random frequency hopping.

Furthermore, according to the preferred embodiment, in the step (a), the detection signal is emitted via the frequency hopping in an active avoidance manner. Particularly, the step (a) further comprises a step of detecting the differential signal and emitting the detection signal by frequency hopping during the fluctuation of the differential signal.

It should be understood that based on the Doppler effect principle, the differential signal is output in the step (c) in response to the motion of the object in the detection area. In other words, when the object moves in the detection area, there is a difference of characteristic parameter of the frequency and/or phase between the detection signal and the feedback signal. Accordingly, the fluctuation change is defined by the difference of characteristic parameter of the frequency and/or phase between the detection signal and the feedback signal, such that the fluctuation change is configured to represent the fluctuation in the magnitude or frequency of the voltage of the differential signal as an electrical signal. In other words, the fluctuation of the differential signal corresponds to a change in a characteristic parameter difference of the frequency and/or the phase between the detection signal and the feedback signal.

However, in the step (b), when there is an electromagnetic radiation interference of the same frequency as the detection signal within the detection area, the same frequency electromagnetic radiation and the feedback signal are received at the same time. In other words, the fluctuation change in the differential signal outputted in the step (c) also corresponds to the change in a characteristic parameter difference of the frequency and/or the phase between the detection signal and the electromagnetic interference radiation within the detection area.

Therefore, according to the preferred embodiment, in the step (a), the differential signal is detected, wherein the detection signal is hopped and emitted during the fluctuation of the differential signal. In other words, the detection signal is hopped and emitted via at least one frequency change to reduce the interference of the differential signal in response to the electromagnetic radiation having the same frequency of the detection signal within the detection area in an active avoidance manner, so as to enhance the accuracy of the differential signal in response to the feedback of the motion of the object within the detection area.

It is worth mentioning that, according to the preferred embodiment, the detection signal is emitted by frequency hopping in an active avoidance manner. In other embodiment, the differential signal is detected, wherein the detection signal is hopped and emitted during the fluctuation of the differential signal, such that the detection signal is hopped and emitted via at least one frequency change during the fluctuation of the differential signal. Subsequently, the emission frequency of the detection signal is fixed and maintained to improve the differential signal in response to the feedback of the motion of the object within the detection area.

According to other embodiment, the step (a) further comprises the steps of: detecting a frequency point of electromagnetic radiation in the same frequency range within the detection area, and emitting the detection signal by frequency hopping at an undetected frequency point when the electromagnetic radiation frequency point of the same frequency range exists in the detection area.

In other words, according to the anti-interference method based on Doppler effect principle, it should be understood that the dynamic frequency in the step (a) is defined as at least one change in the emission frequency of the detection signal, such as at least one change to form the emission frequency of the detection signal by at least one frequency hopping. In other words, the detection signal is emitted in at least one frequency change manner to perform the step (a). Therefore, the step (a), the step (b), and the step (c) are the fundamental steps for the anti-interference method based on Doppler effect principle. Without limiting in the step (a), the rule of emission frequency change of the emission frequency of the detection signal should include an emission condition and the emission numbers, such as the frequency hopping emission conditions and frequency hopping times.

Furthermore, after the step (c), the method of the present invention further comprises a step of:
(d) filtering the differential signal that limits the amplitude of the fluctuation of the differential signal to prevent the interference of the change of the emission frequency of the detection signal to the differential signal so as to enhance the accuracy of the differential signal in response to the feedback of the motion of the object within the detection area.

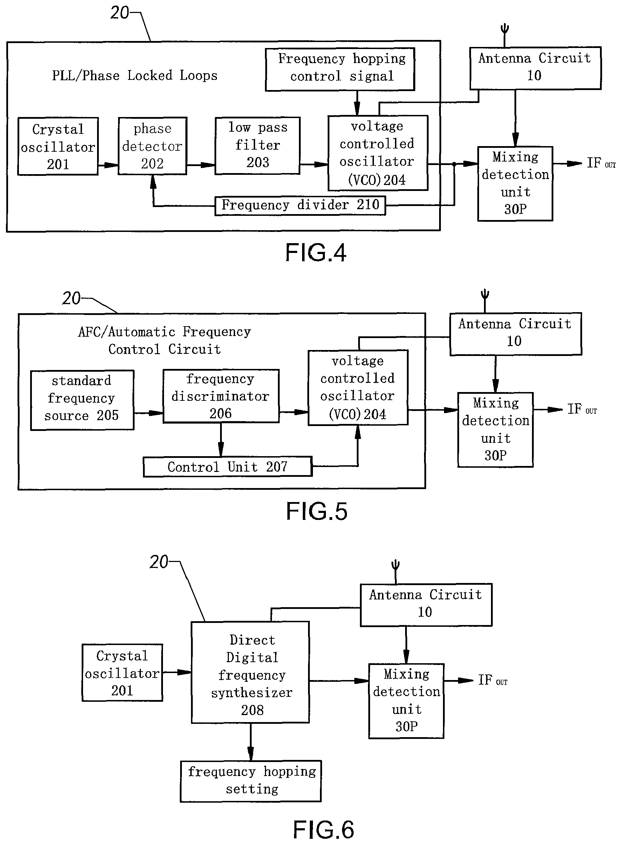

Particularly, the present invention further provides a microwave detection device using the anti-interference method, wherein the frequency of the electromagnetic wave emitted by the microwave detection device is maintained dynamically by dynamically adjusting the frequency parameter of the microwave detection device. According to the preferred embodiment, Figs. 4 to 7 illustrate the structural principle of the microwave detection device of the present invention. The microwave detection device comprises an antenna circuit 10, a frequency hopping oscillating unit 20, and a mixing detection unit 30, wherein the frequency hopping oscillating unit 20 is arranged for hopping and outputting an excitation signal in a frequency range.

The antenna circuit 10 is electrically connected to the frequency hopping oscillating unit 20, wherein the antenna circuit 10 is configured for being excited by the excitation signal to transmit at least a detection signal having the same frequency with the excitation signal, so as to form at least a detection area. The antenna circuit 10 is also configured to receive a feedback signal when the detection signal is reflected by at least one object within the detection area. The mixing detection unit 30 is electrically connected to the frequency hopping oscillating unit 20 and the antenna circuit 10, wherein when the feedback signal is received by the antenna circuit 10, the antenna circuit 10 is configured to transmit the feedback signal to the mixing detection unit 30. Accordingly, after the excitation signal and the feedback signal are received by the mixing detection unit 30, the mixing detection unit 30 is arranged to output a differential signal in response to differential characteristic parameters between the detection signal and the feedback signal, wherein the differential signal corresponds to a motion of the object in the detection area.

Accordingly, the frequency hopping oscillating unit 20 is configured to provide a narrowband oscillation frequency by a crystal oscillator 201 or a standard frequency source 205, such that the frequency parameter of the microwave detection device can be dynamically adjusted via the multiplication of the narrowband oscillation frequency to allow the frequency hopping oscillating unit 20 to hop and output the excitation signal.

It is worth mentioning that the frequency range is set at the 5.8Ghz frequency range as an example as shown in Fig. 3. Fig. 3 illustrates the frequency distribution of the microwave detector of the present invention to compare with the Fig. 2 illustrating the frequency distribution of the conventional microwave detector using the 5.8Ghz frequency range. The conventional microwave detector using the 5.8Ghz frequency range is difficult to be controlled accurately in its manufacturing process and is fixed at a certain frequency in the 5.8Ghz frequency range (5.725-5.875Ghz) due to the self-oscillation mode. With a certain bandwidth, the probability of electromagnetic wave coverage with the same frequency range is getting higher and higher. The conventional microwave detector using the 5.8Ghz frequency range will have higher chance for being interfered with the same frequency range of electromagnetic radiation. Since the frequency range with the frequency point is wider, the conventional microwave detector using the 5.8Ghz frequency range is more easily interfered with the electromagnetic radiation in the same frequency range. At the same time, the wider frequency bandwidth also makes the conventional microwave detector using the 5.8Ghz frequency range to have a greater chance of being matched and interfered with other radio equipment in the same frequency range and interfere with other radio equipment in the same frequency range.

According to the preferred embodiment, the microwave detection device of the present invention provides the narrowband oscillation frequency by the crystal oscillator 201 or the standard frequency source 205 through the frequency hopping oscillating unit 20, so as to output the excitation signal via the multiplication of the narrowband oscillation frequency. The narrowband oscillation of the crystal oscillator 201 or the standard frequency source 205 has a narrow bandwidth. In the fixed frequency range, such as at the 5.8Ghz, the frequency hopping oscillating unit 20 is configured to hop the hopping point of the excitation signal to increase, that is, the frequency hopping points of the corresponding detection signal transmitted by the antenna circuit 10 is increased. It will beneficial for reducing the chance of the detection signal having the same frequency as the operating frequencies of other radio devices with one of the odd-order frequency, even-order harmonic frequency, and the multiplication frequency of the electromagnetic frequency. In other words, the probability of the microwave detection device interfering with other radio equipment will be reduced. At the same time, it will also reduce the probability of t the electromagnetic wave received by the antenna circuit 10 having the same frequency of other electromagnetic radiation. In other words, the probability of the microwave detection device being interfered by other electromagnetic radiation in the same frequency range will be reduced.

Furthermore, the frequency hopping oscillating unit 20 is configured as a circuit module of any one or more of Automatic Frequency Control AFC, Phase Locked Loops PLL, and Direct Digital Synthesizer DDS, which is based on the crystal oscillator 201 or the standard frequency source 205 to generate the detection signal by frequency hopping with a frequency of different frequency doubling stages of the narrow frequency oscillation frequency.

As shown in Fig. 4 as an example, the frequency hopping oscillating unit 20 is configured as Phase Locked Loops to provide the basic narrowband oscillation by the crystal oscillator 201, such that the oscillating frequency point of the frequency hopping oscillating unit 20 can be controlled by the frequency hopping control signal in order to hop and output the excitation signal. Particularly, the frequency hopping oscillating unit 20, which is configured as the Phase Locked Loops, comprises the crystal oscillator 201, a phase detector 202, a low pass filter 203, a frequency divider 210, and a voltage controlled oscillator (VCO) 204. Accordingly, the crystal oscillator 201, the phase detector 202, the low pass filter 203 and the voltage controlled oscillator 204 are sequentially connected in order, wherein the phase detector 202 is connected to the mixing detection unit 30 through the frequency divider 210. The voltage controlled oscillator 204 is electrically connected to the antenna circuit 10 and the mixing detection unit 30 at the same time. Therefore, the frequency oscillating oscillator 204 is able to hop and output the excitation signal by controlling the frequency hopping control signal of the frequency oscillating oscillator 204.

It is worth mentioning that, in one embodiment as an example, the crystal oscillator 201, the phase detector 202, the low pass filter 203, the voltage controlled oscillator 204, and the frequency divider 210 are integrated to form an integrated circuit of the frequency hopping oscillating unit 20. In another embodiment, at least one of the crystal oscillator 201, the phase detector 202, the low pass filter 203, the voltage controlled oscillator 204, and the frequency divider 210 of the frequency hopping oscillating unit 20 can be integrated with the mixing detection unit 30 to form the integrated circuit, which should not limited in the present invention.

As shown in Fig. 5 as an example, the frequency hopping oscillating unit 20 is configured as the Automatic Frequency Control circuit to provides the basic narrowband oscillation at the standard frequency source 205 in order to control the oscillating frequency of the frequency hopping oscillating unit 20 for hopping and outputting the excitation signal. Accordingly, the frequency hopping oscillating element 20, which is configured as the Automatic Frequency Control circuit, comprises the standard frequency source 205, a frequency discriminator 206, a control unit 207, and the voltage controlled oscillator 204. The frequency discriminator 206 is electrically connected to the standard frequency source 205, the control unit 207, and the voltage controlled oscillator 204 respectively. The control unit 207 is further electrically connected to the voltage controlled oscillator 204, wherein the voltage controlled oscillator 204 is electrically connected to the antenna circuit 10 and the mixing detection unit 30 at the same time. Therefore, through controlling the voltage controlled oscillator 204 by the control unit 207, the frequency hopping oscillating unit 20 is set to perform the frequency hopping within a certain bandwidth range, such that the frequency oscillating oscillator 204 is able to hop and output the excitation signal.

Similarly, in one embodiment as an example, the standard frequency source 205, the frequency discriminator 206, the control unit 207 and the voltage controlled oscillator 204 are integrated to form an integrated circuit of the frequency hopping oscillating unit 20. In another embodiment, at least one of the standard frequency source 205, the frequency discriminator 206, the control unit 207, and the voltage controlled oscillator 204 of the frequency hopping oscillating unit 20 can be integrated with the mixing detection unit 30 to form the integrated circuit, which should not limited in the present invention.

As shown in Fig. 6 as an example, the frequency hopping oscillating unit 20 is configured to provide a baseband narrowband oscillation with the crystal oscillator 201 and to set the frequency hopping control signal to a direct digital frequency synthesizer 208, such that the oscillation frequency of the frequency hopping oscillating unit 20 is able to be controlled to hop and output the excitation signal. Accordingly, the frequency hopping oscillating unit 20 comprises the crystal oscillator 201 and the direct digital frequency synthesizer 208 electrically connected to the crystal oscillator 201, wherein the direct digital frequency synthesizer 208 is electrically connected to the antenna circuit 10 and the mixing detection unit 30 at the same time, such that frequency hopping oscillating unit 20 is able to hop and output the excitation signal by setting the frequency hopping control signal to the direct digital frequency synthesizer 208.

Similarly, in one embodiment, the crystal oscillator 201 and the direct digital frequency synthesizer 208 integrated to form an integrated circuit of the frequency hopping oscillating unit 20. In another embodiment, at least one of the crystal oscillator 201 and the direct digital frequency synthesizer 208 of the frequency hopping oscillating unit 20 can be integrated with the mixing detection unit 30 to form the integrated circuit, which should not limited in the present invention.

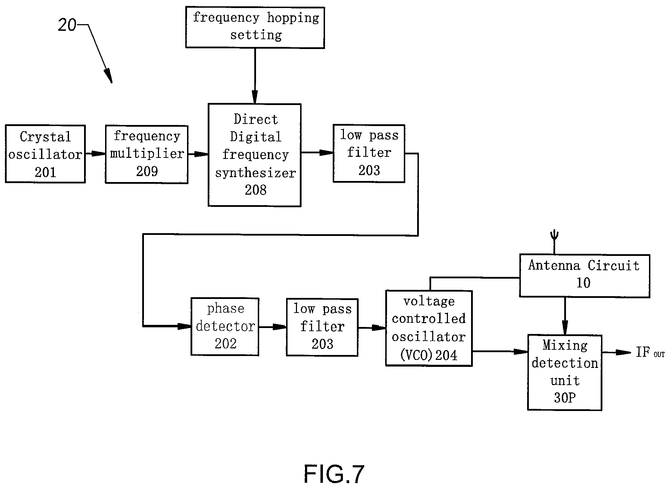

As shown in Fig. 7 as an example, the frequency hopping oscillating unit 20 is configured as the Phase Locked Loop to provide a basic narrowband oscillation with the crystal oscillator 201 through the direct digital frequency synthesizer 208 in order to control the oscillating frequency of the frequency hopping oscillating unit 20 for hopping and outputting the excitation signal. Accordingly, the frequency hopping oscillating unit 20 comprises the frequency divider 210 and a plurality of crystal oscillators 201 electrically connected in sequence, a frequency multiplier 209, the direct digital frequency synthesizer 208, and one of the low pass filters 203. The phase detector 202, another (second) low pass filter 203, and the voltage controlled oscillator 204. The phase detector 202 is electrically connected to the mixing detection unit 30 via the frequency divider 210, wherein the voltage controlled oscillator 204 is also electrically connected to the antenna circuit 10 and the mixing detection unit 30 at the same time. Through the direct digital frequency synthesizer 208 to control the oscillating frequency of the frequency hopping oscillating unit 20, the frequency hopping oscillating unit 20 is arranged for hopping and outputting the excitation signal.

Similarly, in this embodiment, the frequency divider 210, the crystal oscillator 201, the frequency multiplier 209, the direct digital frequency synthesizer 208, and the two low pass filters 203, the phase detector 202 and the voltage controlled oscillator 204 are integrated to form an integrated circuit of the frequency hopping oscillating unit 20. In other embodiment, at least one of the frequency divider 210, the crystal oscillator 201, the frequency multiplier 209, the direct digital frequency synthesizer 208, and the low pass filters 203, the phase detector 202, and the voltage controlled oscillator 204 of the frequency hopping oscillating unit 20 can be integrated with the mixing detection unit 30 to form the integrated circuit, which should not limited in the present invention.

It should be understood that the frequency hopping oscillating unit 20 can hop and output the excitation signal in various methods. In other words, the structural configuration of the frequency hopping oscillating unit 20 can be modified, which should not limited in the present invention. For example, but not limited to, in the above examples, circuit module of any one or more of Automatic Frequency Control (AFC), Phase Locked Loops (PLL), and Direct Digital Synthesizer (DDS) is incorporated with the crystal oscillator 201 or the standard frequency source 205 to provide the frequency of different frequency doubling levels of the oscillating frequency generated by the basic narrowband oscillation frequency so as to hop and output the excitation signal.

It should be understood that the differential signal is a frequency differential signal generated according to a frequency difference between the detection signal and the corresponding feedback signal, or a phase change between the detection signal and the corresponding feedback signal, in order to determine the motion state of the object within the detection area according to the frequency difference or phase change of the characteristic parameter of the differential signal.

Accordingly, when the object moves within the detection area, there is a difference in characteristic parameters of the frequency and/or phase between the detection signal and the feedback signal. The difference in characteristic parameters of the frequency and/or phase between the detection signal and the feedback signal is a fluctuation variation in the differential signal, such as the magnitude change or frequency change of the current of the differential signal as an electrical signal. In other words, the fluctuation in the differential signal corresponds to a change in the characteristic parameter of the frequency and/or phase change between the detection signal and the feedback signal.

However, when there is an electromagnetic radiation having the same frequency interferes with the detection signal within the detection area, the antenna circuit 10 will receive the feedback signal and the electromagnetic radiation having the same frequency of the detection signal at the same time. In other words, the fluctuation in the differential signal output by the mixing detection unit 30 may also correspond to the characteristic parameter difference of the frequency and/or phase change between the detection signal and the electromagnetic interference radiation within the detection area.

Therefore, according to the preferred embodiment, through the electrical connection between the frequency hopping oscillating unit 20 and the mixing detection unit 30, the frequency hopping oscillating unit 20 is further configured to detect the differential signal output by the mixing detection unit 30 and to hop and output the excitation signal when the differential signal is fluctuating. In other words, the excitation signal is output via at least a frequency change to enable the antenna circuit 10 to hop and emit the detection signal. Therefore, when the differential signal is fluctuating, the detection signal is hopped and emitted to actively prevent the interference between the detection signal and the electromagnetic radiation having the same frequency thereof within the detection area, so as to improve the accuracy of the feedback signal corresponding to the differential signal with respect to the motion of the object within the detection area.

It is worth mentioning that, according to the alternative mode of the embodiment, through the electrical connection between the frequency hopping oscillating unit 20 and the mixing detection unit 30, the frequency hopping oscillating unit 20 is configured to detect the differential signal output by the mixing detection unit 30 and to output the excitation signal via at least one frequency hopping. Subsequently, the output frequency of the excitation signal is retained and maintained to improve the accuracy of the feedback signal corresponding to the differential signal with respect to the motion of the object within the detection area.

In other words, according to the present invention, the excitation signal hopped and output by the frequency hopping oscillating element 20 of the microwave detection device refers to the output of the excitation signal via at least one frequency change, so as to enable the detection signal emitted by the antenna circuit 10 via at least one frequency change. The rule of hopping and outputting the excitation signal by the frequency hopping oscillating unit 20 should not be limited, including the hopping trigger condition and the hopping frequency of the excitation signal by the frequency hopping oscillating unit 20.

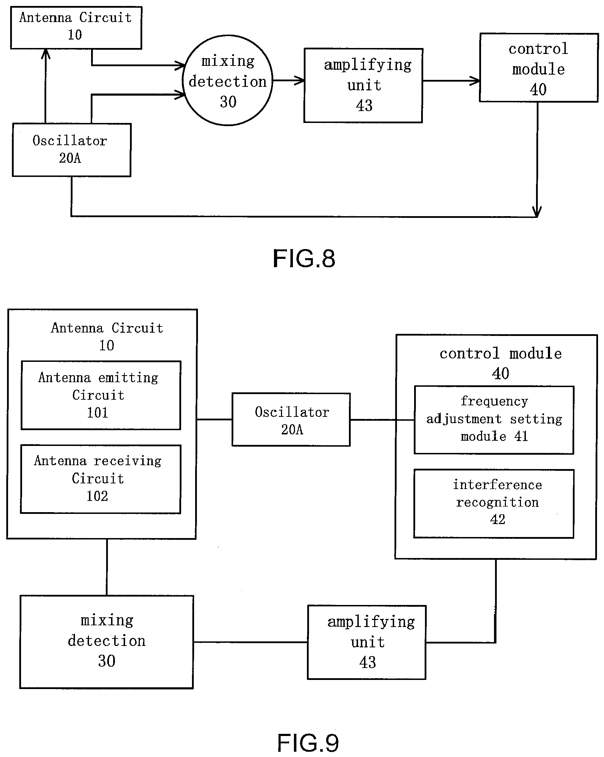

As shown in Figs. 8 to 11 of the drawings, the microwave detection device of the present invention implements different embodiments of dynamic adjustment of frequency parameters. The microwave detection device comprises an antenna circuit 10, an oscillator 20A, a mixing detection unit 30, and a control module 40. The oscillator 20A is configured at a self-excited oscillation mode to provide an oscillation frequency by outputting an excitation signal in a frequency range. The control module 40 is electrically connected to the oscillator 20A and is arranged to input a frequency-variable control voltage/current feedback adjustment manner to the oscillator 20A for controlling the oscillator 20A to output the excitation signal at a dynamic frequency. The antenna circuit 10 is electrically connected to the oscillator 20A, wherein the antenna circuit 10 is arranged for being excited by the excitation signal to emit at least one detection signal having the same frequency of the excitation signal, so as to form at least one detection area, and is arranged to receive the feedback signal formed by the detection signal reflected by the object within the detection area. The mixing detection unit 30 is electrically connected to the oscillator 20A and the antenna circuit 10, wherein when the feedback signal is received by the antenna circuit 10, the antenna circuit 10 is arranged to transmit the received signal to the mixing detection unit 30 in the form of an feedback signal. The mixing detection unit 30 is arranged to receive the excitation signal and the feedback signal and is arranged to output a differential signal according to a difference in characteristic parameters between the excitation signal and the feedback signal. Accordingly, the differential signal is a signal with response to motion of the object within the detection area.

In other words, comparing to the aforementioned microwave detection device of the preferred embodiment which comprises the frequency hopping oscillating unit 20, the frequency parameter dynamic adjustment of the microwave detection device of this embodiment is based on the structure of the existing microwave detector to combine the oscillator 20A and the control module 40 corresponding to the frequency hopping oscillating unit 20. In other words, the frequency hopping oscillating unit 20 is constructed with the oscillator 20A and the control module 40. The frequency variation mode of the excitation signal should not be limited, such as the frequency change mode of the step-less frequency change and the frequency hopping.

Preferably, the control module 40 is electrically connected to the mixing detection unit 30. In other words, the antenna circuit 10, the oscillator 20A, the mixing detection unit 30, and the control module 40 are communicatively connected with each other to form a closed loop detection system. The control module 40 is configured to control the antenna circuit 10 to emit the detection signal at different frequency ranges in a feedback manner. In other words, when the control module 40 of the microwave detection device receives the differential signal via the mixing detection unit 30, the control module 40 is arranged to feed back the frequency variation control voltage/current to the oscillator 20A in order to control the oscillator 20A for outputting the excitation signal at a dynamic frequency. In other words, the antenna circuit 10 is controlled to emit the detection signal at a dynamic frequency, such that the control module 40 is arranged to determine whether the differential signal is an interference signal or not after the frequency change. In order to determine whether the differential signal is an interference signal, the microwave detection device is arranged to emit the detection signal as one of the continuous frequencies corresponding to the differential signal having no fluctuation, such that the microwave interference source is defined within the detection area, so as to improve the accuracy of the feedback of the differential signal to the motion of the object in the detection area.

Alternatively, the control module 40 is configured to control the control module 10 to emit the detection signal at different frequency ranges in an actively adjusted manner. In other words, the control module 40 of the microwave detection device is configured to transmit the frequency-variable control voltage/current to the oscillator 20A intermittently or in real time manner in order control the antenna circuit 10 to emit the detection signal with at least two different frequencies at a dynamic frequency. Therefore, the control module 40 is arranged to determine whether the differential signal is an interference signal based on the differential signal obtained by the mixing detection unit 30 before and after the frequency change. When the object in the detection area is maintained stationary, the control module 40 is configured to control the antenna circuit 10 to emit the detection signal with at least two different frequencies at a dynamic frequency. And, according to the differential signal, the control module 40 is configured to determine whether there is a microwave interference source within the detection area. Therefore, the control module 40 can identify the frequency of the microwave interference source in the detection area based on the frequency of the detection signal emitted by the microwave detection device. The control module 40 can also control the antenna circuit 10 to emit the detection signal having the frequency different from the microwave interference source in the detection area by dynamically adjusting the frequency parameter of the microwave detection device to actively prevent the emission of the detection signal matching with the frequency of the microwave interference source in the detection area. As a result, the interference from the microwave interference source to the microwave detection device is further eliminated, and the frequency of the detection signal emitted by the microwave detection device is prevented from being matched with the operating frequency of other radio devices, so as to improve the stability of the microwave detection device and to prevent the detection signal emitted by the microwave detection affecting the normal operation of other radio devices.

Accordingly, as shown in Fig. 9, the control module 40 comprises a frequency adjustment setting module 41 and an interference recognition module 42, wherein the frequency adjustment setting module 41 is communicatively connected to the oscillator 20A. The frequency adjustment setting module 41 is configured to output a frequency adjustment control signal to the oscillator 20A to control the frequency output of the excitation signal of the oscillator 20A, so as to change or adjust the frequency of the detection signal emitted by the emission of the antenna circuit 10. The frequency adjustment control signal output by the frequency adjustment setting module 41 can be, but not limited to, an electrical signal such as a voltage signal or a current signal. The interference identification module 42 is configured to determine whether there is a microwave interference source in the detection area by determining whether there is a fluctuation of the differential signal corresponding to the detection signal with at least two different frequencies. For example, when the microwave detection device continuously emits at least one frequency of the detection beam, the differential signal does not have any fluctuation. As a result, the microwave interference source is determined in the detection area and the differential signal is determined to be an interference signal. When the object in the detection area is maintained stationary, the control module 40 is configured to control the antenna circuit 10 to emit the detection signal with at least two different frequencies at a dynamic frequency, and to determine whether the microwave interference source in the detection are according to the differential signal.

Particularly, the frequency adjustment setting module 41 and the interference recognition module 42 of the control module 40 are integrally integrated to form an integrated circuit. For example, the control module 40 can be, but not limited to, an MCU, a DSP, an FPGA, and an external high precision ADC integrated chip.

It is worth mentioning that, as shown in Figs. 8 and 9 , the control module 40 preferably further comprises an amplifying unit 43 , wherein the amplifying unit 43 is electrically connected to the mixing detecting unit 30 and is configured to amplify the differential signal, such that the frequency adjustment setting module 41 and the interference recognition module 42 of the control module 40 are enable to respectively control the frequency and identify of the outputted excitation signal of the oscillator 20A based on the amplified differential signal for determining whether there is a microwave interference source in the detection area. It should be understood that the amplifying unit 43 can be configured independently from the control module 40, or can be integrated with the control module 40, which should be not limited in the present invention.

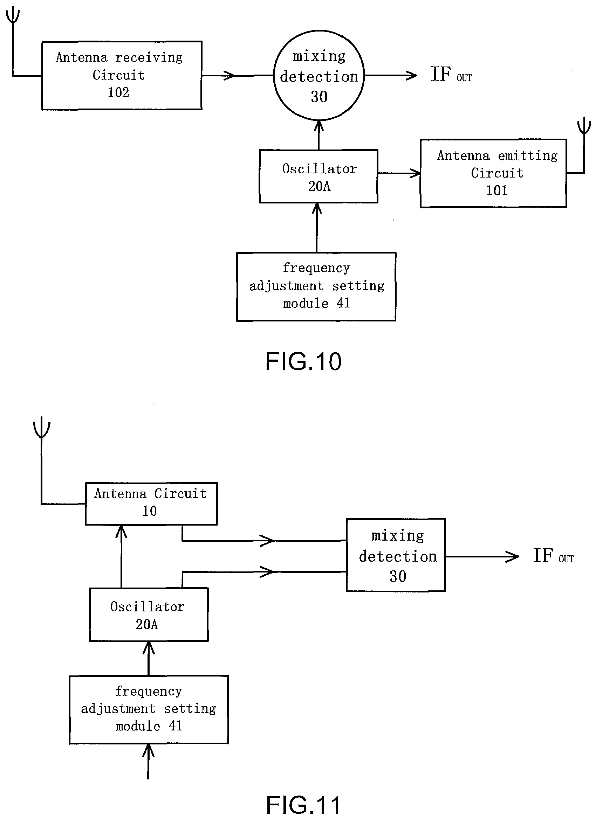

Furthermore, Fig. 10 illustrates the preferred embodiment of the microwave detection device of the present invention. The antenna circuit 10 further comprises at least one antenna emitting circuit 101 and at least one antenna receiving circuit 102, wherein the antenna emitting circuit 101 is electrically connected to the oscillator 20A. Accordingly, the antenna emitting circuit 101 is configured to emit the detection signal at the same frequency as the oscillator 20A based on the excitation signal of the oscillator 20A. The antenna receiving circuit 102 is configured to receive the corresponding feedback signal after the detecting signal is emitted, and is configured to transmit the feedback signal to the mixing detecting unit 30, wherein the mixing detecting unit 30 is configured to derive the differential signal based on the excitation signal generated by the oscillator 20A and the feedback signal from the antenna receiving circuit 102.

It should be understood that the antenna emitting circuit 101 of the antenna circuit 10 can be, but not limited to, an emitting antenna, and the antenna receiving circuit 102 can be, but is not limited to, a receiving antenna. Preferably, as shown in Fig. 11, the antenna transmitting circuit 101 and the antenna receiving circuit 102 are the same antenna device and are integrated to form an integrated antenna circuit. In other words, the antenna circuit 10, as an antenna device, is excited by the oscillator 20A to emit the same frequency of the detection signal, and to receive the corresponding feedback signal from the detection signal to the mixing detection unit 30. Alternatively, the antenna receiving circuit 102 and the antenna emitting circuit 101 are different circuits or different antenna devices.

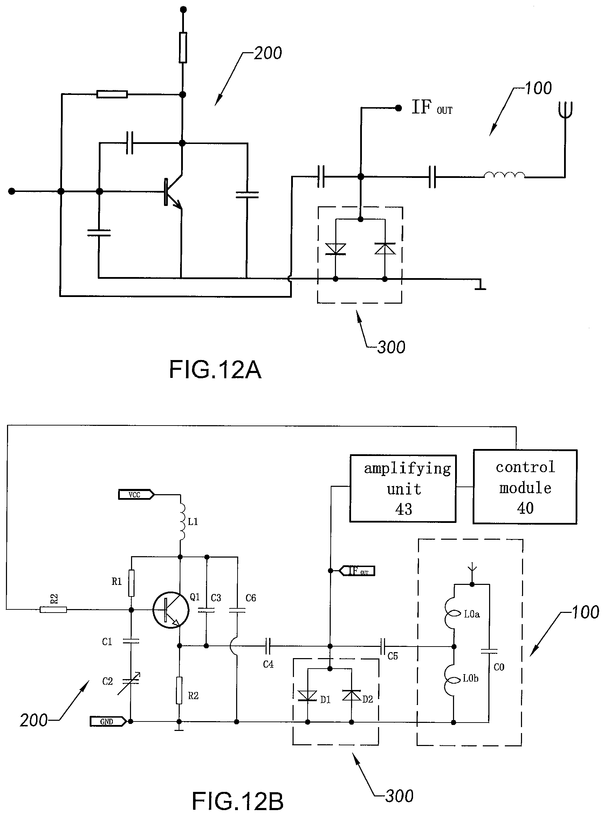

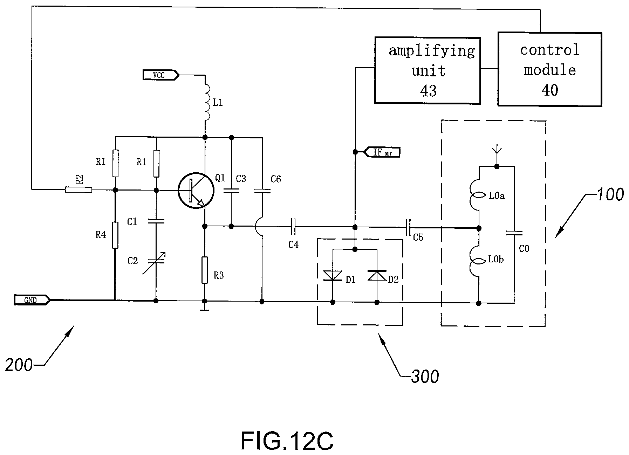

Figs. 12A to 12C illustrate different equivalent circuit implementations of the microwave detection device to show the equivalent circuit for the circuit principle of dynamic adjustment of frequency parameters based on the structure of the existing microwave detector. FIG. 12A shows a circuit principle for dynamic adjustment of frequency parameters based on the structure of a conventional microwave detector. Figs. 12B and 12C show the circuit principle of the dynamic adjustment of the frequency parameter based on the structure of the low impedance microwave detection device. It will be understood that the embodiments of the equivalent circuit of the microwave detection device in the present invention are merely examples and should not be limited in the present invention.

As shown in Fig. 12A, the equivalent circuit of the microwave detection device comprises an antenna circuit 100, an oscillation circuit 200, and a mixing detection circuit 300, wherein the antenna circuit 100 corresponds to the antenna circuit 10, the oscillation circuit 200 corresponds to the oscillator 20A, and the mixing detection circuit 300 corresponds to the mixing detection unit 30. It should be understood that, based on the circuit schematic diagram shown in Fig. 10A, the oscillation circuit 200 is configured to use a conventional three-point oscillating circuit and to output the excitation signal at the collecting terminal of the triode of the oscillating circuit 200 to the mixing detection circuit 300 in order to excite the antenna circuit 100. Accordingly, through the adjustment of the base voltage/current at the triode of the oscillating circuit 200, such as transmitting the frequency-variable control voltage/current to the triode of the oscillation circuit 200 to form a voltage/current change of the triode, the frequency of the excitation signal output at the collecting terminal of the triode of the oscillation circuit 200 can be adjusted, such that the antenna circuit 100 is arranged to emit the detection signal at a dynamic frequency.

As shown in Figs. 12B and 12C, the corresponding equivalent circuit further comprises the antenna circuit 100, the oscillation circuit 200, and the mixing detection circuit 300. The difference between the equivalent circuit of the microwave detection device in Fig. 12A and the equivalent circuit of the microwave detection device in Figs. 12B and 12C is that the microwave detection device in Figs. 12B and 12C is a low impedance microwave detection device. Particularly, the radiation source of the microwave detection device corresponding to the equivalent circuit shown in Figs. 12B and 12C is grounded. The equivalent circuit of the antenna circuit 100 has a feed point adapted to be energized or excited by the oscillation circuit 200, and a ground point. Similarly, through the adjustment of the base voltage/current of the triode of the oscillating circuit 200, such as outputting the frequency adjustment control voltage/current by the control module 40 to the triode of the oscillation circuit 200 to form a change in the base voltage/current of the triode to the triode of the oscillation circuit 200 by adjusting the resistance between the base and the collecting terminal of the triode and between the base and the emitter, the frequency of the excitation signal output by the oscillation circuit 200 can be adjusted, such that the antenna circuit 100 is configured to emit the detection signal at a dynamic frequency.

Particularly, the control module 40 is configured between the mixing detection circuit 300 and the oscillation circuit 200, and is arranged to feed back the frequency-variable control voltage/current to the oscillation circuit 200 when the differential signal is output by the mixing detection circuit 300, so as to control the antenna circuit 100 to emit the detection signal at a dynamic frequency in a feedback manner.

It is worth mentioning that the frequency adjustment setting module 41 can output an analog voltage or a bias voltage to the oscillator 20A, wherein the oscillator 20A is configured to correspondingly adjust the frequency of the excitation signal according to the analog voltage or the bias voltage, so as to change the frequency of the detection signal emitted by the antenna circuit 10.

For example, the frequency adjustment setting module 41 is arranged to output the frequency adjustment control signal to the oscillator 20A by outputting a step voltage in order to control the frequency of the excitation signal in a step-jumping manner. When the frequency of the detection signal emitted by the antenna circuit 10 is controlled by the step voltage of the frequency adjustment setting module 41 in a step-jumping manner, the control module 40, the antenna circuit 10, and the oscillator 20A can form a closed loop controlled system. In other words, when the interference recognition module 42 of the control module 40 recognizes that there is a fluctuation of the differential signal, the frequency adjustment setting module 41 is arranged to output the frequency adjustment control signal to the oscillator 20A, so as to adjust the frequency of the detection signal emitted by the antenna circuit 10. After adjusting the frequency of the detection signal, the interference identification module 42 is arranged to identify the presence or absence of fluctuations in the differential signal to determine whether the differential signal is an interference signal or not.

Preferably, according to the preferred embodiment, the step voltage is formed based on switching between a high voltage level, a low voltage level and a high resistance state. Alternatively, the step voltage is formed based on a voltage change at a segment between a high voltage level to a low voltage level.

For example, the frequency adjustment setting module 41 is arranged to output a linear analog voltage to the oscillator 20A in order to control the frequency of the output of the excitation signal of the oscillator 20A in a linear continuous manner. The detection signal emitted by the oscillator 20A to excite the antenna circuit 10 is also changed in the same manner. It should be understood that the frequency adjustment setting module 41 can control the antenna circuit 10 to continuously output the detection signals at different frequencies by outputting the linear analog voltage.

For example, the frequency adjustment setting module 41 is arranged to output a pulse integrated voltage to the oscillator 20A in order to control the frequency of the output of the excitation signal of the oscillator 20A in a linear continuous manner. The detection signal emitted by the oscillator 20A to excite the antenna circuit 10 is also changed in the same manner. Preferably, the pulse integrated voltage is an adjustment of a pulse width and an integration of a DC voltage after processing.

It is worth mentioning that when the antenna circuit 10 is arranged to continuously output two or more of the detection signals having similar frequency ranges, harmonics are generated by the detection signals at different frequencies. For example, the second harmonic and the third harmonic will interfere with each other, such that the harmonics of the detection signal tend to be flat, so as to avoid the energy concentration of the harmonics of the detection signal and to reduce the interference of the harmonics generated by the microwave detection device during the detection process on other electrical devices.

Accordingly, the microwave detection device using the 5.8 GHz is an example to illustrate the microwave detection device based on the Doppler effect principle and its anti-radiation interference method. It should be understood that the 5.8 GHz frequency should not be the limitation of the microwave detection device based on the Doppler effect principle of the present invention and its anti-radiation interference method. The microwave detection device based on the principle of Doppler effect of the present invention and its anti-radiation interference method are applicable to the microwave detector based on the Doppler effect principle at any frequency range.

Accordingly, since the 5.8 GHz frequency range is located in the frequency range of the RS test, when the microwave detection device based on the Doppler effect principle of the present invention and its anti-radiation interference method are applied to the 5.8 GHz frequency, the frequency of the microwave detection device is able to be maintained dynamically, while the microwave detection device can be prevented from being interfered with the amplitude modulation signal of the same frequency range in the RS test so as to cause the ineffectiveness of the microwave detection device.

One skilled in the art will understand that the embodiment of the present invention as shown in the drawings and described above is exemplary only and not intended to be limiting.

It will thus be seen that the objects of the present invention have been fully and effectively accomplished. The embodiments have been shown and described for the purposes of illustrating the functional and structural principles of the present invention and is subject to change without departure from such principles. Therefore, this invention includes all modifications encompassed within the spirit and scope of the following claims.

## Claims

1. An anti-interference method of a microwave detection device, comprising the steps of:
(a) emitting at least a detection signal at a dynamic frequency in a frequency range to form at least one detection area;
(b) receiving a feedback signal formed by said detection signal reflected by at least an object within said detection area; and
(c) outputting a differential signal in response to a difference in characteristic parameters between said detection signal and said feedback signal, wherein said differential signal is configured in response to a motion of the object in the detection area.

2. The anti-interference method, as recited in claim 1, wherein, in the step (a), said frequency of said detection signal is set at a 5.8 GHz frequency having a frequency range of 5.725-5.875 GHz, wherein, in the step (c), the differential signal is a phase differential signal generated in response to a phase difference between said detection signal and said feedback signal.

3. The anti-interference method, as recited in claim 1, wherein, in the step (a), said frequency of said detection signal is set at a 5.8 GHz frequency having a frequency range of 5.725-5.875 GHz, wherein, in the step (c), the differential signal is a phase differential signal generated in response to a phase difference between said detection signal and said feedback signal.

4. The anti-interference method, as recited in claim 1, wherein the step (a) further comprises the steps of detecting said differential signal, hopping said frequency of said detection signal at least one time to output said detection signal at different frequency within said frequency range, and subsequently maintaining said frequency of said detection signal after said frequency of said detection signal is hopped.

5. The anti-interference method, as recited in claim 1, wherein the step (a) further comprises the steps of detecting electromagnetic radiation frequency points within said frequency range in said detection area, and when said electromagnetic radiation frequency point at the same frequency range exists in said detection area, hopping and emitting said detection signal at an undetected frequency point within said frequency range.

6. The anti-interference method, as recited in claim 1, wherein the step (a) further comprises the steps of providing a basic narrowband oscillation frequency by one of a crystal oscillator and a standard frequency source, and within said frequency range, emitting said detection signal by hopping said detection signal at different frequency doubling stages of said narrow frequency oscillation frequency, so as to hop and emit said detection signal at said dynamic frequency.

7. The anti-interference method, as recited in claim 6, wherein, in the step (a), said narrow frequency oscillation frequency at different frequency doubling stages is generated by a circuit module of one or more of Automatic Frequency Control (AFC), Phase Locked Loops (PLL), Direct Digital Synthesizer (DDS), voltage controlled oscillator (VCO), frequency divider and frequency multiplier, in order to hop and emit said detection signal.

8. The anti-interference method, as recited in claim 7, wherein, in the step (a), said basic narrowband oscillation frequency is provided by said crystal oscillator, wherein by controlling said phase locked loop through a frequency hopping control signal, said detection signal is hopped and emitted at different frequency doubling stages of said narrow frequency oscillation frequency.

9. The anti-interference method, as recited in claim 7, wherein, in the step (a), said basic narrowband oscillation frequency is provided by said standard frequency source, wherein by controlling said automatic frequency control circuit, said detection signal is hopped and emitted at different frequency doubling stages of said narrow frequency oscillation frequency.

10. The anti-interference method, as recited in claim 7, wherein, in the step (a), said basic narrowband oscillation frequency is provided by said crystal oscillator, wherein by setting a frequency hopping control signal to said direct digital frequency synthesizer, said detection signal is hopped and emitted at different frequency doubling stages of said narrow frequency oscillation frequency.

11. The anti-interference method, as recited in claim 7, wherein, in the step (a), said basic narrowband oscillation frequency is provided by said crystal oscillator, wherein by setting a frequency hopping control signal of said direct digital frequency synthesizer to said phase-locked loop, said detection signal is hopped and emitted at different frequency doubling stages of said narrow frequency oscillation frequency.

12. The anti-interference method, as recited in claim 1, after the step (c), further comprising a step of: (d) filtering said differential signal by limiting an amplitude of said differential signal when said differential signal is fluctuating.

13. The anti-interference method, as recited in claim 1, wherein the step (a) further comprises the steps of providing an oscillation frequency by an oscillator, and within said frequency range, emitting said detection signal at said dynamic frequency by transmitting a frequency adjustment control signal to said oscillator.

14. The anti-interference method, as recited in claim 13, wherein, in the step (a), said frequency adjustment control signal is a step voltage that said detection signal is emitted by frequency hopping in said frequency range.

15. The anti-interference method, as recited in claim 13, wherein, in the step (a), said frequency adjustment control signal is one of a linear analog voltage and a pulse integrated voltage.
